# EUROPEAN PATENT APPLICATION

(11) **EP 2 910 503 A1**
(43) Date of publication of application: **26.08.2015**
(21) Application number: 15151595.4
(22) Date of filing: 19.01.2015
(51) Int. Cl.: B65G 47/68, B65G 47/96

(54) **Goods sorting apparatus**

(30) Priority: 21.02.2014 JP 2014032227
(71) Applicant: Kabushiki Kaisha Toshiba, Minato-ku Tokyo 105-8001 (JP)
(72) Inventor: Asari, Yukio, Tokyo (JP); Fujihara, Hiroaki, Tokyo (JP)
(74) Representative: Horn Kleimann Waitzhofer Patentanwälte PartG mbB

(57) **Abstract**

According to one embodiment, a goods sorting apparatus includes: conveyor units (11) configured to move in a conveying direction of goods (G) and transfer the goods (G) loaded thereon in a direction intersecting the conveying direction; a sorting portion (13) configured to sort the goods (G) conveyed by the conveyor units (11); a first conveyor route (12) along which the conveyor units (11) move toward the sorting portion (13) at a first speed; a loading portion (14) in which the goods (G) are loaded onto the conveyor units (11) at a loading position; a second conveyor route (43) having a decelerating area (43A) in which the conveyor units (11) decelerate toward a second speed, which is lower than the first speed, on the upstream side in the conveying direction of the loading position, a movement area (43B) in which the conveyor units (11) move at the second speed at the loading position, and an accelerating area (43C) in which the conveyor units (11) accelerate toward a speed higher than the second speed, on the downstream side in the conveying direction of the loading position; and a conveyor route switching portion (12s) at which the goods (G) are conveyed from the second conveyor route (43) to the first conveyor route (12).

## Description

### FIELD

Embodiments described herein relate generally to a goods sorting apparatus.

### BACKGROUND

Conventionally, there are cross running belt sorters in which a plurality of cells that are conveyed at a constant speed in a conveying direction are respectively provided with belt structures that are driven in a direction orthogonal to the conveying direction. In such cross running belt sorters, in order to improve the sorting efficiency of goods conveyed by the cells, it is necessary to increase the conveying speed of the cells. However, if the allowable time to load goods onto the cells becomes shorter in accordance with an increase in the conveying speed, proper processing may be difficult.

### BRIEF DESCRIPTION OF THE DRAWINGS

FIG. 1 is a view showing the configuration of a goods sorting apparatus of one embodiment;
FIG. 2 is an exploded perspective view showing the configuration of a conveyor unit of the goods sorting apparatus of the embodiment;
FIG. 3 is a view showing the configuration of a loading portion of the goods sorting apparatus of the embodiment;
FIG. 4 is a view showing the configuration of the loading portion of the goods sorting apparatus according to a first modification of the embodiment;
FIG. 5 is a view showing the configuration of the loading portion of the goods sorting apparatus according to a second modification of the embodiment;
FIG. 6 is a perspective view schematically showing the configuration of the loading portion of the goods sorting apparatus according to the second modification of the embodiment;
FIG. 7 is a view showing the configuration of the loading portion of the goods sorting apparatus according to a third modification of the embodiment;
FIG. 8 is a view showing the configuration of the loading portion of the goods sorting apparatus according to a fourth modification of the foregoing embodiment; and
FIG. 9 is a view showing the configuration of the loading portion of the goods sorting apparatus according to a fifth modification of the embodiment.

### DETAILED DESCRIPTION

According to one embodiment, there is provided a goods sorting apparatus including: conveyor units configured to move in a conveying direction of goods and transfer the goods loaded thereon in a direction intersecting the conveying direction; a sorting portion configured to sort the goods conveyed by the conveyor units; a first conveyor route along which the conveyor units move toward the sorting portion at a first speed; a loading portion in which the goods are loaded onto the conveyor units at a loading position; a second conveyor route having a decelerating area in which the conveyor units decelerate toward a second speed, which is lower than the first speed, on the upstream side in the conveying direction of the loading position, a movement area in which the conveyor units move at the second speed at the loading position, and an accelerating area in which the conveyor units accelerate toward a speed higher than the second speed, on the downstream side in the conveying direction of the loading position; and a conveyor route switching portion at which the goods are conveyed from the second conveyor route to the first conveyor route.

Hereinafter, a goods sorting apparatus of this embodiment will be described with reference to the drawings.

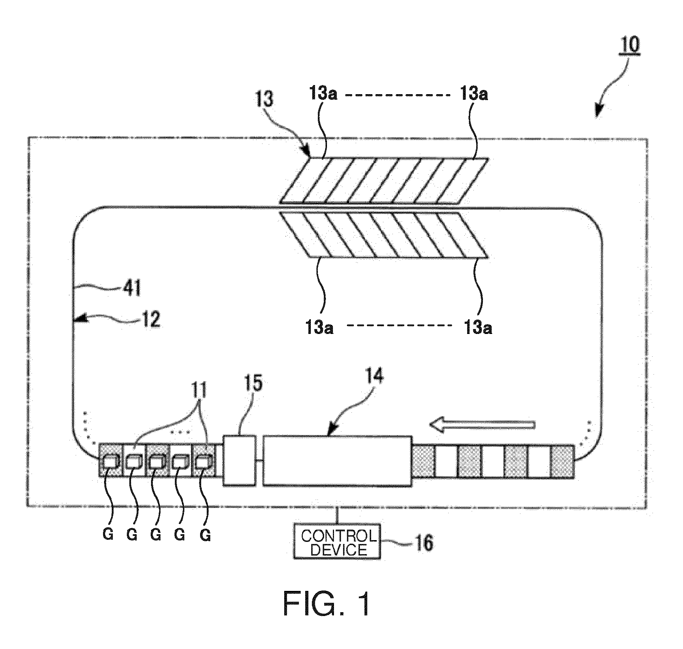

As shown in FIG. 1, a goods sorting apparatus 10 of the embodiment includes a plurality of conveyor units 11, and a main conveyor route 12 along which the plurality of conveyor units 11 move in a line. The main conveyor route 12 is provided, for example, with an endless chain 41 that moves along the main conveyor route 12. The goods sorting apparatus 10 includes a sorting portion 13, a loading portion 14, and an information obtaining portion 15 arranged on the main conveyor route 12. The goods sorting apparatus 10 further includes a control device 16 that performs comprehensive control of the goods sorting apparatus 10.

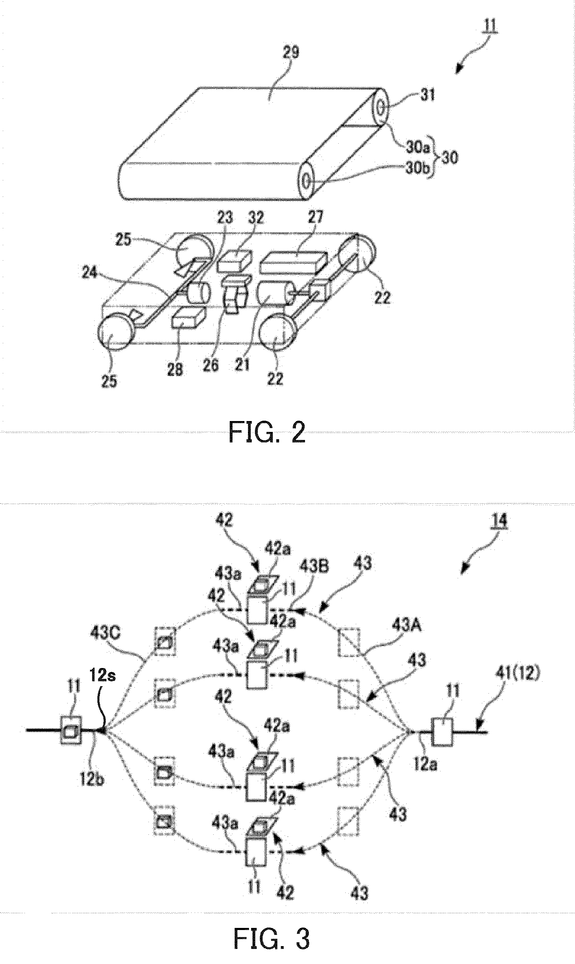

As shown in FIG. 2, each of the plurality of conveyor units 11 includes a traveling drive motor 21, drive wheels 22, a steering motor 23, a steering structure 24, steering wheels 25, a guide portion 26, a battery 27, a communication device 28, a cross running belt 29, a belt drive structure 30, a belt drive motor 31, and a controller 32. The traveling drive motor 21 is linked to the drive wheels 22. The traveling drive motor 21 rotationally drives the drive wheels 22 in response to the control by the controller 32, thereby providing a travel driving force to the conveyor unit 11. The steering motor 23 is linked to the steering structure 24.

The steering structure 24 is linked to the steering wheels 25. The steering motor 23 drives the steering structure 24 in response to the control by the controller 32, thereby steering the steering wheels 25. The guide portion 26 may be configured by a guide wheel capable of making contact with the endless chain 41 that is arranged on the main conveyor route 12, a grasping structure capable of grasping and releasing the endless chain 41, or the like. The guide portion 26 constrains the position of the conveyor unit 11 to those on the main conveyor route 12.

The battery 27 supplies electricity to each of the traveling drive motor 21, the steering motor 23, and the belt drive motor 31, as a power source of the conveyor unit 11. The battery 27 stores regenerative electric power obtained through regeneration of the traveling drive motor 21. The communication device 28 exchanges various types of information by communicating with the communication devices 28 arranged in other conveyor units 11, the sorting portion 13, the information obtaining portion 15, the control device 16, and the like. The cross running belt 29 is an endless belt that spans between a pair of rollers 30a and 30b of the belt drive structure 30. The roller 30a, which is one of the rollers, is a driving roller that is rotationally driven by the belt drive motor 31, and the belt drive motor 31 is provided inside the roller 30a. Alternatively, the roller 30a may be rotated via the rotational shaft of the belt drive motor 31. The roller 30b, which is the other roller, is a driven roller that rotates following the cross running belt 29. The pair of rollers 30a and 30b have rotational shafts arranged parallel to the front-rear direction of the conveyor unit 11. Accordingly, the cross running belt 29 is driven in a direction orthogonal to the movement direction of the conveyor unit 11 (i.e., the conveying direction of goods G), and transfers the goods G loaded on the surface of the cross running belt 29, in the direction orthogonal to the conveying direction.

The controller 32 performs comprehensive control of the conveyor unit 11. For example, the controller 32 drives each of the traveling drive motor 21 and the steering motor 23 using various types of information obtained via the communication device 28, thereby controlling autonomous traveling of the conveyor unit 11. The controller 32 causes the conveyor unit 11 to travel at a first speed, which is constant, at least along the main conveyor route 12. The first speed is, for example, a speed corresponding to the allowable time necessary to properly load the goods G from the cross running belts 29 of the respective conveyor units 11 into shooters 13a, with driving of the belt drive motors 31 of the conveyor units 11. The controller 32 causes the conveyor unit 11 to travel in the loading portion 14 such that the conveyor unit 11 sequentially decelerates, maintains a second speed, which is constant and is lower than the first speed, and accelerates.

For example, the controller 32 controls acceleration, deceleration, and stoppage of the cross running belt 29, in synchronization with the loading portion 14 transferring the goods G. The controller 32 accelerates, decelerates, and stops the belt drive motor 31 at a timing designated by the loading portion 14, thereby controlling receiving and holding of the goods G by the cross running belt 29.

For example, information of the goods G loaded on the surface of the cross running belt 29 in the loading portion 14 is transmitted from the information obtaining portion 15 via the communication device 28 to the controller 32. The controller 32 transmits the obtained information of the goods G via the communication device 28 to the sorting portion 13, and controls the driving of the belt drive motor 31 in response to a belt drive command received from the sorting portion 13 via the communication device 28. The controller 32 drives the belt drive motor 31 at a timing designated by the sorting portion 13, thereby causing the goods G to be sorted and transferred at the sorting portion 13.

As shown in FIG. 1, the main conveyor route 12 forms a circulation route in which each of the plurality of conveyor units 11 circulates through the sorting portion 13, the loading portion 14, and the information obtaining portion 15, by connecting the sorting portion 13, the loading portion 14, and the information obtaining portion 15. On the main conveyor route 12, the guide portions 26 of the conveyor units 11 are in contact with or grasp the endless chain 41. Accordingly, the conveyor units 11 that travel with a travel driving force of the traveling drive motors 21 are guided via the guide portions 26 by the endless chain 41 along the main conveyor route 12. The conveyor units 11 sequentially circulate through the loading portion 14, the information obtaining portion 15, and the sorting portion 13 along the main conveyor route 12.

The sorting portion 13 includes a plurality of shooters 13a having different sorting destinations, arranged along the main conveyor route 12. The sorting portion 13 determines a sorting destination of the goods G according to the information of the goods G received from each conveyor unit 11, and selects a shooter 13a corresponding to the determined sorting destination, from among the plurality of shooters 13a. The sorting portion 13 transmits a command designating a timing for the belt drive motor 31 to drive the cross running belt 29, to the conveyor unit 11, so as to allow the goods G to be loaded from the conveyor unit 11 into the selected shooter 13a. Accordingly, the sorting portion 13 allows the goods G to be transferred from each conveyor unit 11 to one of the plurality of shooters 13a, according to a sorting destination corresponding to the information of the goods G received from that conveyor unit 11.

As shown in FIG. 3, the loading portion 14 includes one or more (e.g., a plurality of) injectors 42 and sub conveyor routes 43. One injector 42 is provided on one sub conveyor route 43. Each injector 42 includes a transfer belt 42a that transfers the goods G onto the surface of the cross running belt 29 of the conveyor unit 11 that is present at the loading position of the goods G. The loading portion 14 transmits a command designating a timing for the belt drive motor 31 to accelerate, decelerate, and stop the cross running belt 29, to each conveyor unit 11, so as to allow the goods G to be transferred from each injector 42 to that conveyor unit 11. Accordingly, the loading portion 14 allows the goods G to be transferred from each injector 42 to each conveyor unit 11 that is present at the loading position of the goods G.

The plurality of sub conveyor routes 43 are arranged in parallel in an area between a separating point 12a and a merging point 12b arranged on the main conveyor route 12. In the loading portion 14, the guide portions 26 are separated from the endless chain 41 between the separating point 12a and the merging point 12b of the main conveyor route 12. The sub conveyor route 43 are traveling routes along which the conveyor units 11 autonomously travel in response to the control by the controllers 32, and include no member for guiding the conveyor units 11, such as the endless chain 41 of the main conveyor route 12. That is to say, the sub conveyor routes 43 are traveling routes along which the conveyor units 11 autonomously travel with a travel driving force of the traveling drive motors 21 and steering by the steering structures 24 in response to the control by the controllers 32. Each of the sub conveyor routes 43 includes a fixed route 43a set in advance in an area including at least the corresponding injector 42. The fixed route 43a is set so as to include the loading position of the goods G by the corresponding injector 42. Each sub conveyor route 43 includes, in an area other than the area including the corresponding injector 42, a route set in advance or a route that may be changed as appropriate by the controllers 32 of the conveyor units 11 (i.e., a route not fixed in advance).

Each sub conveyor route 43 includes at least three areas in which different movement states are set for the conveyor units 11, that is, a decelerating area 43A, a constant speed area 43B, and an accelerating area 43C. The decelerating area 43A is set on the upstream side in the conveying direction of the loading position of the injector 42. The decelerating area 43A is an area in which the conveyor units 11 separated at the separating point 12a from the main conveyor route 12 travel toward the loading position of the injector 42 while decelerating from the first speed toward the second speed, which is lower than the first speed. The constant speed area 43B is an area in which the conveyor units 11 travel at the second speed, which is constant, and includes the loading position of the injector 42. The constant speed area 43B may be the same as the fixed route 43a, or may include at least part of the fixed route 43a. The accelerating area 43C is set on the downstream side in the conveying direction of the loading position of the injector 42. The accelerating area 43C is an area in which the conveyor units 11 having the goods G loaded thereon travel toward the merging point 12b of the main conveyor route 12 while accelerating from the second speed toward the first speed. The second speed is, for example, a speed corresponding to the allowable time necessary to properly transfer the goods G from the injectors 42 onto the conveyor units 11. This allowable time is, for example, a time required for the injectors 42 to transfer the goods G and for the conveyor units 11 to receive and hold the goods G by accelerating, decelerating, and stopping the cross running belts 29. If the first speed is taken as V, the second speed is set to 1/4V in the case where there are four injectors 42 as shown in FIG. 3. The goods G are conveyed from the sub conveyor routes 43 via a conveyor switching portion 12s onto the main conveyor route 12.

The information obtaining portion 15 includes, for example, an optical character recognition (OCR) apparatus, a code reading apparatus for reading one-dimensional or two-dimensional code, or the like. The information obtaining portion 15 obtains information associated with the goods G loaded on the conveyor units 11, and transmits the obtained information to the conveyor units 11 and the control device 16.

Hereinafter, operations of the loading portion 14 of the goods sorting apparatus 10 and each conveyor unit 11 in the loading portion 14 according to the embodiment will be described. First, each conveyor unit 11 not having the goods G loaded thereon travels along the main conveyor route 12 at the first speed. When reaching the loading portion 14, the conveyor unit 11 is separated at the separating point 12a from the main conveyor route 12. At that time, the controller 32 of the conveyor unit 11 selects one of the plurality of injectors 42 according to the various types of information received from the control device 16, the controllers 32 of other conveyor units 11, the loading portion 14, and the like. The controller 32 of the conveyor unit 11 sets, as the traveling route in the loading portion 14, the sub conveyor route 43 including the fixed route 43a corresponding to the selected injector 42. The various types of information may be, for example, information indicating the congestion level of the plurality of conveyor units 11 at each of the plurality of sub conveyor routes 43 or the plurality of injectors 42, information indicating the sub conveyor routes 43 or the injectors 42 selected by other conveyor units 11, or the like. For example, the controller 32 of the conveyor unit 11 selects the injector 42 or the sub conveyor route 43 with the lowest congestion level from among the plurality of injectors 42 or the plurality of sub conveyor routes 43.

Next, in the decelerating area 43A of the selected sub conveyor route 43, the conveyor unit 11 not having the goods G loaded thereon travels toward the loading position of the injector 42 while decelerating from the first speed toward the second speed. Next, in the constant speed area 43B of the selected sub conveyor route 43, the conveyor unit 11 not having the goods G loaded thereon passes through the loading position of the injector 42 while traveling at the second speed, which is constant. At that time, the controller 32 of the conveyor unit 11 controls driving and stoppage of the cross running belt 29 in synchronization with the goods G being transferred at the loading position of the injector 42. The controller 32 drives and stops the belt drive motor 31 at a timing designated by the loading portion 14 for the injector 42, thereby controlling receiving and holding of the goods G by the cross running belt 29. Next, in the accelerating area 43C of the selected sub conveyor route 43, the conveyor unit 11 having the goods G loaded thereon travels toward the merging point 12b of the main conveyor route 12 while accelerating from the second speed toward the first speed.

Next, when reaching the merging point 12b of the main conveyor route 12 at the first speed, the conveyor unit 11 having the goods G loaded thereon merges into the main conveyor route 12 at the merging point 12b. At that time, the controller 32 of the conveyor unit 11 adjusts the timing to merge into the main conveyor route 12 according to the various types of information received from the control device 16, the controllers 32 of other conveyor units 11, and the like. The various types of information may be, for example, information indicating the congestion level of the plurality of conveyor units 11 in an area including the merging point 12b, information indicating the timing at which other conveyor units 11 merge into the main conveyor route 12, or the like. For example, the controller 32 of the conveyor unit 11 adjusts the timing such that the conveyor unit 11 is spaced away from the other conveyor units 11 by a predetermined distance.

According to the embodiment described above, the sub conveyor routes 43 each including the decelerating area 43A, the constant speed area 43B, and the accelerating area 43C are provided, and, thus, the conveyor units 11 can pass through the loading positions at the second speed, which is lower than the first speed on the main conveyor route 12. Thus, even when the first speed on the main conveyor route 12 is increased, the second speed can be prevented from increasing, and the minimum allowable time necessary to properly transfer the goods G onto the conveyor units 11 at the loading positions can be ensured. Accordingly, it is possible to increase the processing efficiency in sorting goods, without changing the configuration of the main conveyor route 12 and the sub conveyor routes 43.

Furthermore, since a plurality of injectors 42 and sub conveyor routes 43 are provided for one main conveyor route 12, it is possible not only to increase the processing efficiency due to an increase in the conveying speed (i.e., the first speed) on the main conveyor route 12, but also to increase the processing efficiency in loading the goods through parallel processing in the loading portion 14. Accordingly, it is possible to further increase the processing efficiency in sorting goods by the entire goods sorting apparatus 10.

Furthermore, since the sub conveyor routes 43, which are traveling routes along which the conveyor units 11 autonomously travel, are provided, it is possible to improve the degree of freedom in controlling the traveling of the conveyor units 11 between the loading positions, and the separating point 12a and the merging point 12b. Furthermore, since the sub conveyor routes 43 including the fixed routes 43a set to areas including the respective injectors 42 are provided, it is possible for the conveyor units 11 to precisely pass through the loading positions of the injectors 42. Furthermore, since the main conveyor route 12 and the plurality of sub conveyor routes 43 along which the conveyor units 11 move via the separating point 12a and the merging point 12b are provided, it is possible to prevent cooperative operations with the plurality of other conveyor units 11 from being complicated, and easily control the autonomous traveling of the conveyor units 11.

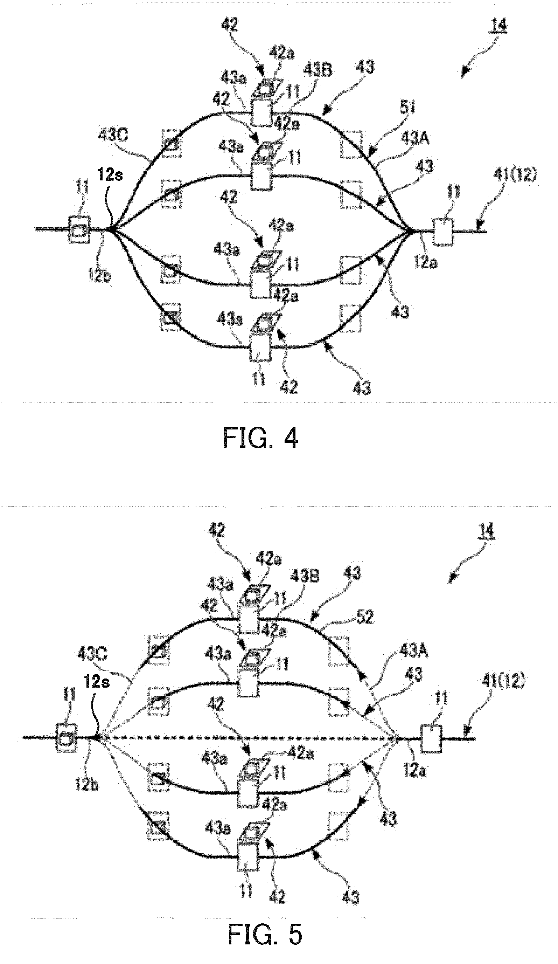

Hereinafter, a first modification will be described. The goods sorting apparatus 10 of the foregoing embodiment may be such that at least part of each of the plurality of sub conveyor routes 43 includes a sub guide member 51 fixed to the apparatus main body, such as a rail for making contact with the guide portions 26 of the conveyor units 11, thereby guiding the conveyor units 11. In this case, the at least part of each of the plurality of sub conveyor routes 43 may be the area including the loading position of the injector 42. For example, the goods sorting apparatus 10 according to the first modification of the foregoing embodiment is such that, as shown in FIG. 4, the entire area of each of the plurality of sub conveyor routes 43 includes the sub guide member 51. The plurality of sub guide members 51 are connected to the endless chain 41 of the main conveyor route 12 at the separating point 12a and at the merging point 12b of the main conveyor route 12. When moving from the main conveyor route 12 to one of the plurality of sub conveyor routes 43 at the separating point 12a, each conveyor unit 11 temporarily cancels the contact of the guide portion 26 with the endless chain 41. After moving to the selected sub conveyor route 43, the conveyor unit 11 brings the guide portion 26 into contact with the sub guide member 51. In a similar manner, when moving from one of the plurality of sub conveyor routes 43 to the main conveyor route 12 at the merging point 12b, each conveyor unit 11 temporarily cancels the contact of the guide portion 26 with the sub guide member 51. After moving to the main conveyor route 12, the conveyor unit 11 brings the guide portion 26 into contact with the endless chain 41.

According to the first modification described above, at least part of each of the plurality of sub conveyor routes 43 includes the sub guide member 51, and, thus, the autonomous traveling of the conveyor units 11 can be easily controlled. Furthermore, the areas including at least the loading positions of the injectors 42 include the sub guide members 51, and, thus, the conveyor units 11 can precisely pass through the loading positions of the injectors 42.

Hereinafter, a second modification will be described. The goods sorting apparatus 10 according to the first modification of the foregoing embodiment may include sub guide members 52 configured by endless members such as endless belts that are driven along the sub conveyor routes 43 at the second speed, which is constant, instead of the sub guide members 51 configured by rails or the like fixed to the apparatus main body. In this case, the sub guide members 52 are connected to the guide portions 26 of the conveyor units 11, thereby guiding the conveyor units 11 along the sub conveyor routes 43. The goods sorting apparatus 10 according to the foregoing embodiment and the first modification of the embodiment may be such that the main conveyor route 12 includes a guide member 53 configured by an endless member such as an endless belt that is driven along the main conveyor route 12 at the first speed, which is constant, instead of the endless chain 41 configured by a rail or the like fixed to the apparatus main body. In this case, the guide member 53 is connected to the guide portions 26 of the conveyor units 11, thereby guiding the conveyor units 11 along the main conveyor route 12.

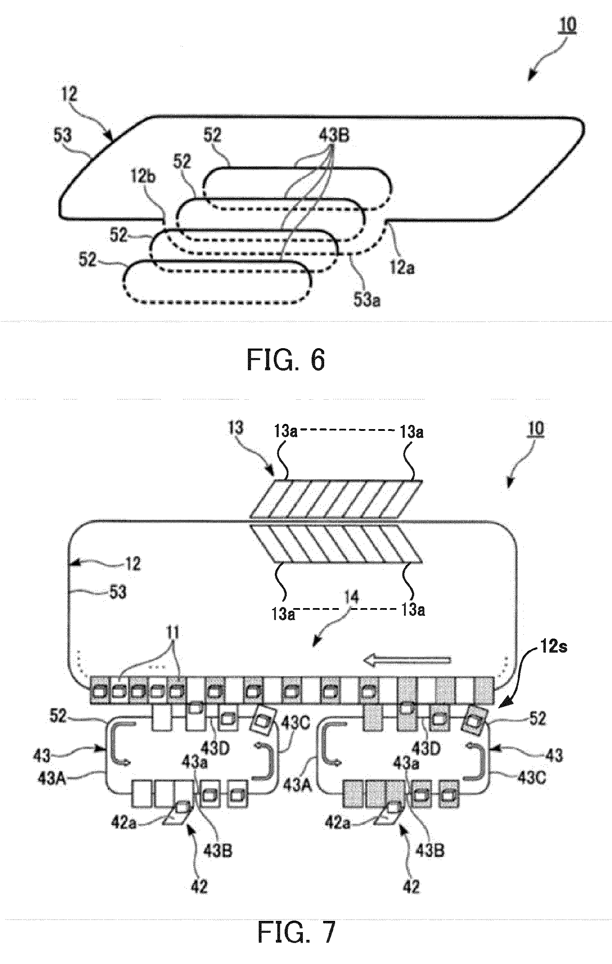

For example, as shown in FIGS. 5 and 6, the goods sorting apparatus 10 according to the second modification of the foregoing embodiment includes the sub guide members 52 respectively arranged in the constant speed areas 43B of the plurality of sub conveyor routes 43 and the guide member 53 arranged in the entire area of the main conveyor route 12. Each of the sub guide members 52 includes, for example, a portion located on the vertically upward direction side of the conveying reference surface of the conveyor units 11, and a portion located on the vertically downward side of and extending along the conveying reference surface. The sub guide member 52 guides the guide portions 26 of the conveyor units 11 along the sub conveyor route 43, using the portion located on the vertically upward direction side of the conveying reference surface. The guide member 53 includes an alternative route area 53a for bypassing the plurality of sub conveyor routes 43 so as not to interfere with the plurality of sub conveyor routes 43 between the separating point 12a and the merging point 12b of the main conveyor route 12 in the loading portion 14. For example, the alternative route area 53a is provided so as to be located on the vertically downward side of and extending along the conveying reference surface of the conveyor units 11.

Each conveyor unit 11 includes, as the guide portion 26, a grasping structure capable of grasping and releasing the guide member 53 of the main conveyor route 12 and the sub guide members 52 of the plurality of sub conveyor routes 43, for example. On the main conveyor route 12, the conveyor unit 11 causes the guide portion 26 to be connected to the guide member 53, using the grasping structure of the guide portion 26 or the like, so that the conveyor unit 11 is conveyed by the guide member 53 along the main conveyor route 12 at the first speed, which is constant. At that time, regenerative electric power obtained by the conveyor unit 11 through regeneration of the traveling drive motor 21 may be charged to the battery 27. In the decelerating area 43A and the accelerating area 43C of each sub conveyor route 43, the conveyor unit 11 cancels the contact of the guide portion 26 with the sub guide member 52 and the guide member 53, thereby autonomously traveling with driving of each of the traveling drive motor 21 and the steering motor 23. In the constant speed area 43B of the sub conveyor route 43, the conveyor unit 11 causes the guide portion 26 to be connected to the sub guide member 52, so that the conveyor unit 11 is conveyed by the sub guide member 52 along the sub conveyor route 43 at the second speed, which is constant. At that time, regenerative electric power obtained by the conveyor unit 11 through regeneration of the traveling drive motor 21 may be charged to the battery 27.

According to the second modification described above, the sub guide members 52 and the guide member 53 that convey the conveyor units 11 at constant speeds are provided, and, thus, the control for moving the plurality of conveyor units 11 along the main conveyor route 12 and the plurality of sub conveyor routes 43 can be simplified. Furthermore, the batteries 27 can be charged through regeneration of the traveling drive motors 21 of the conveyor units 11.

Hereinafter, a third modification will be described. The goods sorting apparatus 10 according to the second modification of the foregoing embodiment may include the plurality of sub conveyor routes 43 arranged adjacent to part of the main conveyor route 12. For example, as shown in FIG. 7, the goods sorting apparatus 10 according to the third modification of the foregoing embodiment includes the main conveyor route 12 and the plurality of sub conveyor routes 43 arranged adjacent to part of the main conveyor route 12. The main conveyor route 12 includes the guide member 53 configured by an endless member such as an endless belt arranged throughout the entire area of the main conveyor route 12. The guide member 53 is driven along the main conveyor route 12 at the first speed, which is constant. The plurality of sub conveyor routes 43 respectively include the sub guide members 52 configured by endless members such as endless belts arranged throughout the sub conveyor routes 43. The sub guide members 52 are driven along the sub conveyor routes 43 at the first speed, which is the same as that of the guide member 53 in the main conveyor route 12.

On the main conveyor route 12, each conveyor unit 11 causes the guide portion 26 to be connected to the guide member 53, so that the conveyor unit 11 is conveyed by the guide member 53 along the main conveyor route 12 at the first speed, which is constant. At that time, regenerative electric power obtained by the conveyor unit 11 through regeneration of the traveling drive motor 21 may be charged to the battery 27. In the decelerating area 43A, the constant speed area 43B, and the accelerating area 43C of each sub conveyor route 43, the conveyor unit 11 cancels the guide by the sub guide member 52, thereby autonomously traveling with driving of each of the traveling drive motor 21 and the steering motor 23. In an adjacent area 43D, of the sub conveyor route 43, adjacent to part of the main conveyor route 12, the conveyor unit 11 causes the guide portion 26 to be connected to the sub guide member 52, so that the conveyor unit 11 is conveyed by the sub guide member 52 along the sub conveyor route 43 at the first speed, which is the same as that on the main conveyor route 12. At that time, regenerative electric power obtained by the conveyor unit 11 through regeneration of the traveling drive motor 21 may be charged to the battery 27.

In the adjacent area 43D, of each sub conveyor route 43, adjacent to part of the main conveyor route 12, the phase of conveyor units 11 is the same as that of the conveyor units 11 on the main conveyor route 12. The conveyor units 11 adjacent to each other respectively on the main conveyor route 12 and each sub conveyor route 43 and having the same phase perform transfer operation of the goods G, by driving and stopping the cross running belts 29 in synchronization with each other. When the cross running belt 29 of the conveyor unit 11 on the sub conveyor route 43 is about to transfer the goods G toward the conveyor unit 11 on the main conveyor route 12, the cross running belt 29 of the conveyor unit 11 on the main conveyor route 12 is accelerated, decelerated, and stopped in synchronization with the transfer operation. Accordingly, the cross running belt 29 of the conveyor unit 11 on the main conveyor route 12 adjacent to the conveyor unit 11 on the sub conveyor route 43 receives and holds the goods G.

According to the third modification described above, the plurality of sub conveyor routes 43 are arranged adjacent to part of the main conveyor route 12, and, thus, the control for moving the plurality of conveyor units 11 along the main conveyor route 12 and the plurality of sub conveyor routes 43 can be simplified. Furthermore, the batteries 27 can be charged through regeneration of the traveling drive motors 21 of the conveyor units 11.

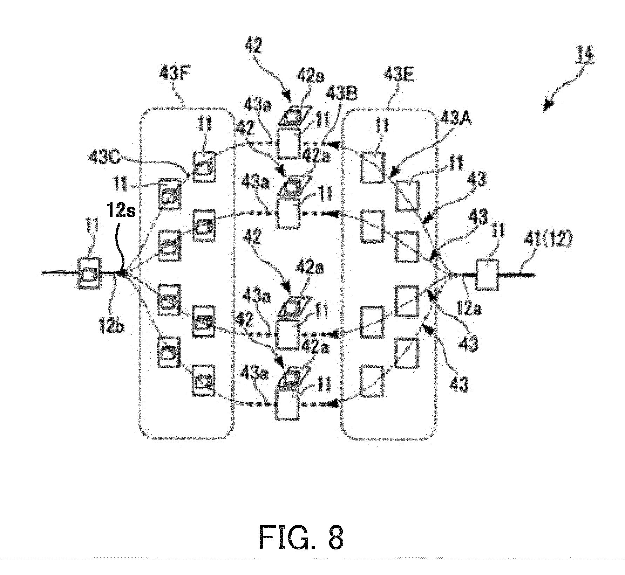

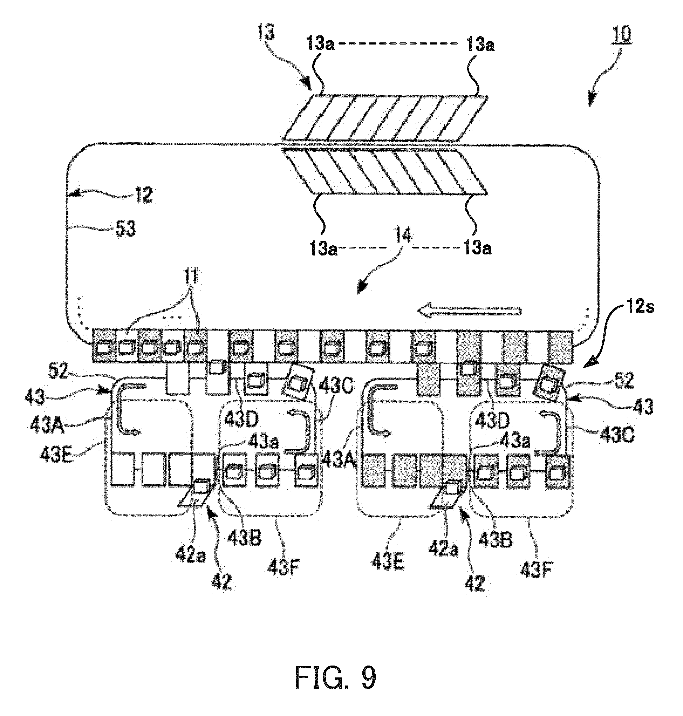

Hereinafter, a fourth and a fifth modification will be described. The goods sorting apparatus 10 according to the foregoing embodiment and the first to third modifications of the embodiment may be such that each of the plurality of sub conveyor routes 43 includes a decelerating side hold area 43E and an accelerating side hold area 43F. The decelerating side hold area 43E is an area in which the plurality of conveyor units 11 not having the goods G loaded thereon are held for adjusting the timing to pass through the decelerating area 43A. The accelerating side hold area 43F is an area in which the plurality of conveyor units 11 having the goods G loaded thereon are held for adjusting the timing to pass through the accelerating area 43C. For example, as shown in FIG. 8, the goods sorting apparatus 10 according to the fourth modification of the foregoing embodiment is such that each sub conveyor route 43 of the goods sorting apparatus 10 of the foregoing embodiment includes the decelerating side hold area 43E and the accelerating side hold area 43F. For example, as shown in FIG. 9, the goods sorting apparatus 10 according to the fifth modification of the foregoing embodiment is such that each sub conveyor route 43 of the goods sorting apparatus 10 according to the third modification of the foregoing embodiment includes the decelerating side hold area 43E and the accelerating side hold area 43F.

According to the fourth and fifth modifications described above, the decelerating side hold area 43E and the accelerating side hold area 43F for holding the plurality of conveyor units 11 are provided, and, thus, the movement of the conveyor units 11 can be adjusted according to the congestion level and the like at the injectors 42 and the main conveyor route 12. Accordingly, the plurality of conveyor units 11 can be efficiently moved throughout the main conveyor route 12 and the plurality of sub conveyor routes 43, and, thus, the processing efficiency in sorting goods can be increased.

Hereinafter, other modifications will be described. The goods sorting apparatus 10 of the foregoing embodiment is such that a plurality of injectors 42 and sub conveyor routes 43 are provided for one main conveyor route 12, but there is no limitation to this. the goods sorting apparatus 10 according to other modifications of the foregoing embodiment may be such that one injector 42 and one sub conveyor route 43 are provided for one main conveyor route 12.

The goods sorting apparatus 10 of the foregoing embodiment is such that the separating point 12a and the merging point 12b shared by the plurality of sub conveyor routes 43 are provided on the main conveyor route 12, but there is no limitation to this. The goods sorting apparatus 10 according to other modifications of the foregoing embodiment may be such that separating points 12a and merging points 12b that are respectively different for the plurality of sub conveyor routes 43 are provided on the main conveyor route 12.

The goods sorting apparatus 10 of the foregoing embodiment is such that the endless chain 41 is not provided between the separating point 12a and the merging point 12b of the main conveyor route 12, but there is no limitation to this. The goods sorting apparatus 10 according to other modifications of the foregoing embodiment may be such that the endless chain 41 is continuously provided between the separating point 12a and the merging point 12b of the main conveyor route 12 so as not to interfere with the plurality of sub conveyor routes 43. In this case, each conveyor unit 11 cancels the contact of the guide portion 26 with the endless chain 41 at the separating point 12a of the main conveyor route 12, and brings the guide portion 26 into contact with the endless chain 41 at the merging point 12b.

The goods sorting apparatus 10 of the foregoing embodiment is such that the conveyor units 11 autonomously travel along the main conveyor route 12 and the plurality of sub conveyor routes 43 in response to the control by the controllers 32, but there is no limitation to this. The goods sorting apparatus 10 according to other modifications of the foregoing embodiment may be such that the conveyor units 11 travel along the main conveyor route 12 and the plurality of sub conveyor routes 43 in response to the comprehensive control by the control device 16.

The goods sorting apparatus 10 of the foregoing embodiment includes the plurality of injectors 42, but there is no limitation to this. Instead of the plurality of injectors 42, a plurality of operators may load the goods G onto the cross running belts 29 of the conveyor units 11 at the loading positions. The second speed in this case is, for example, a speed corresponding to the allowable time necessary for the operators to properly load the goods G onto the conveyor units 11.

In the goods sorting apparatus 10 according to other modifications of the foregoing embodiment, the control device 16 and the controllers 32 may be a software functional portion, or a hardware functional portion such as an LSI. The control device 16 and the controllers 32 may include a processing unit (CPU, etc.) for executing a program for realizing the whole or part of the functions of the control device 16 and the controllers 32 described above.

According to at least one embodiment described above, the sub conveyor routes 43 each including the decelerating area 43A, the constant speed area 43B, and the accelerating area 43C are provided, and, thus, the conveyor units 11 can pass through the loading positions at the second speed, which is lower than the first speed on the main conveyor route 12. Thus, even when the first speed on the main conveyor route 12 is increased, the second speed can be prevented from increasing, and the allowable time necessary to properly transfer the goods G onto the conveyor units 11 at the loading positions can be ensured. Accordingly, it is possible to increase the processing efficiency in sorting goods, without changing the configuration of the main conveyor route 12 and the sub conveyor routes 43.

## Claims

1. A goods sorting apparatus comprising:
conveyor units (11) configured to move in a conveying direction of goods (G) and transfer the goods (G) loaded thereon in a direction intersecting the conveying direction;
a sorting portion (13) configured to sort the goods (G) conveyed by the conveyor units (11);
a first conveyor route (12) along which the conveyor units (11) move toward the sorting portion (13) at a first speed;
a loading portion (14) in which the goods (G) are loaded onto the conveyor units (11) at a loading position;
a second conveyor route (43) having a decelerating area (43A) in which the conveyor units (11) decelerate toward a second speed, which is lower than the first speed, on the upstream side in the conveying direction of the loading position, a movement area (43B) in which the conveyor units (11) move at the second speed at the loading position, and an accelerating area (43C) in which the conveyor units (11) accelerate toward a speed higher than the second speed, on the downstream side in the conveying direction of the loading position; and
a conveyor route switching portion (12s) at which the goods (G) are conveyed from the second conveyor route (43) to the first conveyor route (12).

2. The apparatus according to claim 1, wherein a plurality of the loading positions are provided, the second conveyor route (43) is provided corresponding to each of the plurality of loading positions, and a plurality of the goods (G) are transferred at the conveyor route switching portion (12s) from the plurality of second conveyor routes (43) to the first conveyor route (12).

3. The apparatus according to claim 1 or 2, wherein the second conveyor route (43) includes a decelerating side hold area (43E) in which the plurality of conveyor units (11) not having the goods (G) loaded thereon are held for adjusting the timing to pass through the decelerating area (43A), and an accelerating side hold area (43F) in which the plurality of conveyor units (11) having the goods (G) loaded thereon are held for adjusting the timing to pass through the accelerating area (43C).

4. The apparatus according to any one of claims 1 to 3, wherein the conveyor units (11) moving along at least the second conveyor route (43) include a driving source (21) for traveling, and at least part of the second conveyor route (43) is a traveling route along which the conveyor units (11) travel with a driving force of the driving source (21).

5. The apparatus according to any one of claims 1 to 4, wherein a guide member (51, 52) configured to constrain the positions of the conveyor units (11) to the positions on the second conveyor route (43) is provided at least in an area including the loading position.

6. The apparatus according to claim 5, wherein the guide member (51, 52) is a fixed member, or an endless member for conveying the conveyor units (11) at the second speed.

7. The apparatus according to any one of claims 1 to 6, wherein the second conveyor route (43) is disposed between a separating point (12a) and a merging point (12b) arranged at the conveyor route switching portion (12s) on the first conveyor route (12), and the conveyor units (11) move between the first conveyor route (12) and the second conveyor route (43) at the conveyor route switching portion (12s).

8. The apparatus according to claim 1, wherein the first conveyor route (12) includes an alternative route area (53a) for bypassing the second conveyor route (43).

9. The apparatus according to any one of claims 1 to 6, wherein the second conveyor route (43) is disposed adjacent to the first conveyor route (12) in the conveyor route switching portion (12s), the conveyor units (11) on the second conveyor route (43) move at the first speed in the conveyor route switching portion (12s), the conveyor units (11) on the first conveyor route (12) and the second conveyor route (43) in the conveyor route switching portion (12s) have the same phase, and the goods (G) are transferred from the conveyor units (11) on the second conveyor route (43) to the conveyor units (11) on the first conveyor route (12) in the conveyor route switching portion (12s).
